# EUROPEAN PATENT APPLICATION

(11) **EP 0 773 700 A2**
(43) Date of publication of application: **14.05.1997**
(21) Application number: 96308013.0
(22) Date of filing: 05.11.1996
(51) Int. Cl.: H04R 5/02, H04R 5/027

(54) **Portable loudspeaker/directional microphone peripheral**

(30) Priority: 13.11.1995 US 557764
(71) Applicant: Lucent Technologies Inc., Murray Hill, New Jersey 07974-0636 (US)
(72) Inventor: Welsh, Christopher T., Noblesville, Indiana 46060 (US)
(74) Representative: Watts, Christopher Malcolm Kelway, Dr.

(57) **Abstract**

A loudspeaker system which can be utilized with laptop PCs employs a loudspeaker enclosure having a unique shape which is easily mounted to the back of a display of the laptop PC and also provides sufficient compliant air volume to yield high quality sound. More specifically, the higher quality sound and ease of mounting is realized by employing a loudspeaker enclosure which is in the form of an "L-shape". This allows one leg of the L-shaped enclosure to be employed to attach the loudspeaker, for example, to the back of the laptop PC display unit and allows the speaker portion that is visible to be of minimal size. Additionally, the "L-shaped" loudspeaker enclosure, in addition to providing the desired compliant air volume for quality sound, also allows for the majority of the loudspeaker enclosure to be hidden from the view of a laptop PC user and, therefore, is more aesthetically pleasing to the user.

## Description

### Technical Field

This invention relates to audio systems and, more particularly, to loudspeaker systems.

### Background of the Invention

In many portable multimedia computer arrangements, for example, laptop and/or notebook personal computers (PCs), it is desirable to have high quality sound. Many of these laptop PCs have built in loudspeaker systems. Unfortunately, the sound quality from these systems is lacking because of insufficient compliant air volume, which as is well known is a must for quality sound from the loudspeaker system. Heretofore, quality sound was only realized by using so-called desktop peripheral loudspeakers. Use of such loudspeakers is undesirable because they are large and not easily stored or transported. Additionally, loudspeaker systems historically have been of a rectangular cubic shape, for simplicity of fabrication and manufacture. This would be unacceptable for a loudspeaker system intended to be mounted on a laptop PC display because the amount of compliant air volume required would cause the enclosure to be too large and, therefore, would not be aesthetically acceptable. Also, the arrangement for attaching these prior rectangular shaped loudspeakers to the laptop PC display would be difficult to implement and insecure.

### Summary of the Invention

The problems and limitations of prior loudspeaker systems employed with laptop PCs is overcome by employing loudspeakers including an enclosure having a unique shape which can easily be mounted to the back of a display of the laptop PC and also provide sufficient compliant air volume to yield high quality sound. More specifically, the higher quality sound and ease of mounting is realized by employing a loudspeaker enclosure having first and second legs which are arranged in the form of an "L-shape". This allows one leg of the L-shaped enclosure to be employed to attach the loudspeaker enclosure, for example, to the back of the laptop PC display unit and allows the other loudspeaker enclosure portion that is visible to a PC user to be of minimal size. Additionally, the "L-shaped" loudspeaker enclosure in addition to providing the desired compliant air volume for quality sound, also allows for a significant portion of the loudspeaker enclosure to be hidden from the view of a laptop PC user and, therefore, is more aesthetically pleasing to the user.

### Brief Description of the Drawings

FIG. 1 is a perspective view of a loudspeaker having an enclosure in accordance with the invention;
FIG. 2 is a perspective view of a laptop PC having a pair of loudspeakers including the enclosure in accordance with the invention;
FIG. 3 is a perspective back view of a laptop PC showing the leg of the loudspeakers mounted to the back of the laptop PC display; and
FIG. 4 is a top view of the laptop PC and display showing the loudspeakers mounted to the back of the laptop PC display.

### Detailed Description

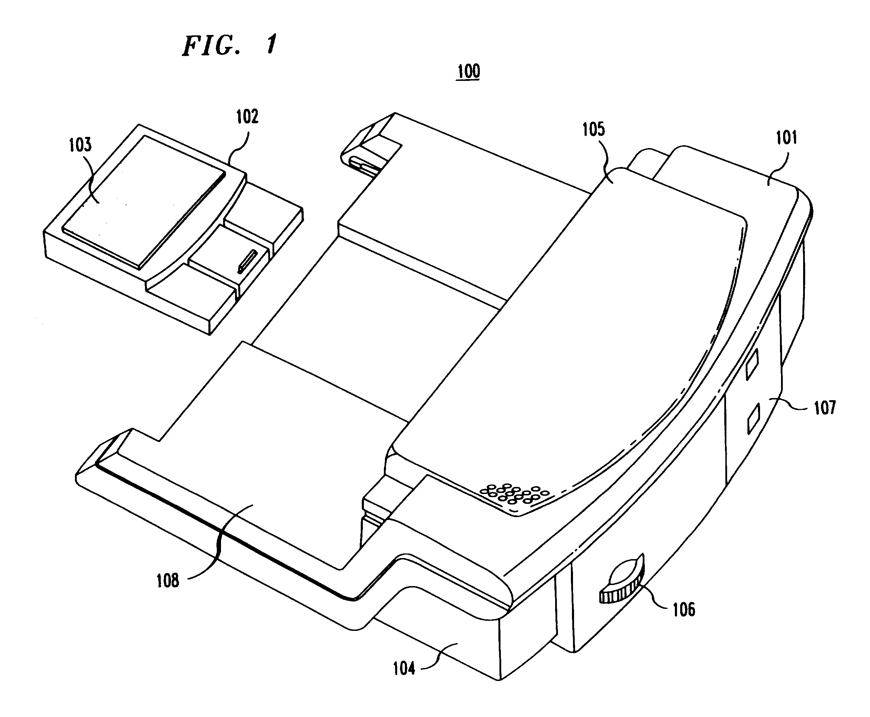

FIG. 1 is a perspective view of a loudspeaker 100 employing an enclosure 101 in accordance with the invention. Also shown is clip 102 including an adhesive element 103 for mounting to the back of a laptop PC display unit, as will be described below. Note that enclosure 101 is an L-shape having a first leg 104 having a first portion of a desired predetermined amount of compliant air volume. A loudspeaker transducer (not shown) is mounted below grill 105 on a upper outer surface of leg 104. Also included in leg 104 is a typical volume control 106 and a directional microphone 107. The second leg, i.e., 108, of enclosure 101 is employed to provide a second predetermined portion of the desired predetermined compliant air volume and also to be mounted via clip 102 on the back side of the laptop PC display unit. Enclosure legs 104 and 108, in combination, form a unitary loudspeaker enclosure 101 which has the desired predetermined compliant air volume. This is important because enclosure leg 104 can be of minimal size and more pleasing aesthetically to the laptop PC user. The desired L-shape is obtained by an upper surface of leg 108 and a rear surface of leg 104 forming substantially a right angle (90°). It will be apparent that the angle between legs 104 and 108 does not have to be exactly a right angle. It should be noted that the compliant air volume of enclosure 101 and, hence, that of enclosure legs 104 and 108 is dependent on the particular loudspeaker transducer being employed. Thus, enclosure legs 104 and 108 are three dimensional and are sized to provide in combination the desired compliant air volume. In one embodiment, the overall height of enclosure leg 104 is 1 and 3/4 inches, the length of enclosure 101 is 5 inches, the width is 4 and 1/2 inches, the thickness of enclosure leg 108 is 7/8 inches, and the height of the rear surface of enclosure leg 104 above the upper surface of leg 108 is 7/8 inches.

Also, the compliant air volume required and, hence, the size of the enclosure 101 and its legs 104 and 108 is dependent on the type of loudspeaker system desired. Note, at least two types of enclosures may be employed in the loudspeaker system, one being an acoustic suspension enclosure and the other being a bass reflex enclosure. It is known that by using the bass reflex enclosure including a tuned port (not shown in FIG. 1) that the enclosure size is minimal, while still realizing a desired frequency response including an extended low frequency range. Note that the tuned port can be in any outer surface of loudspeaker enclosure 101 that is open to the atmosphere. How to implement such tuned ports is well known in the art. It also known that in order to obtain the desired frequency response employing an acoustic suspension enclosure, the volume required would be larger than that for the bass reflex enclosure.

Additionally, in this example, the mounting is realized by sliding loudspeaker 100, and specifically leg 108, on to clip 102 where it is securely locked in place. Any desired adhesive may be employed for the purpose of securing clip 102 onto the back side of the laptop PC display, preferably, there should be a capability to be able to remove clip 102 from the back side of the laptop PC display unit

In the subsequent figures loudspeaker enclosure elements which are similarly numbered to those in FIG. 1 will not be described again in detail.

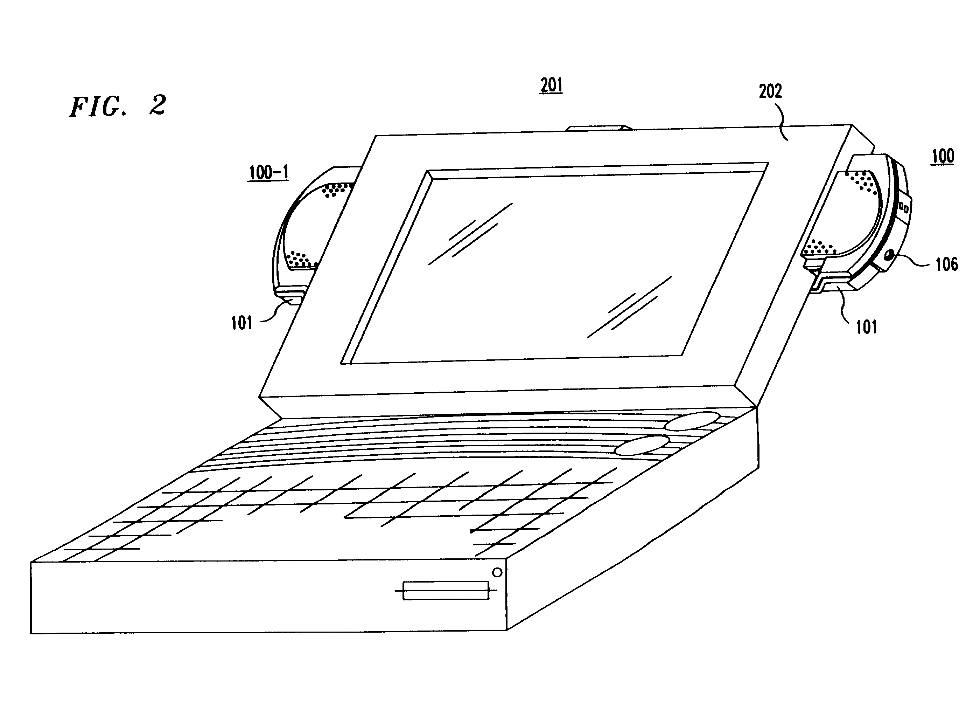

FIG. 2 shows laptop PC 201 including display 202 having a pair of loudspeakers 100 and 100-1 including enclosures 101 mounted thereon, in accordance with the invention. Note that loudspeaker 100 is a so-called main unit because it includes volume control 106 and directional microphone 107, while loudspeaker 100-1 does not include such elements and, therefore, is considered a satellite unit. It should be noted, however, that the enclosures are the same for both loudspeaker 100 and 100-1, namely, enclosure 101.

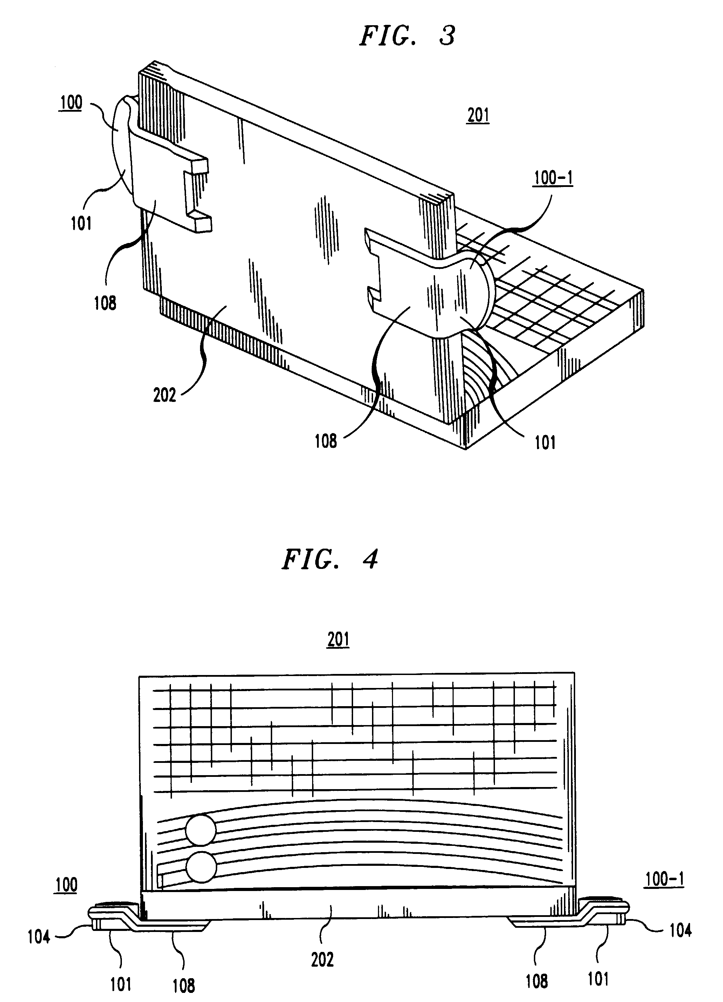

FIG. 3 shows a back perspective view of laptop PC 201 and display 202. Further shown are loudspeakers 100 and 100-1 mounted on display 202. Specifically, note that legs 108 of enclosures 101 are mounted, in this example, on the back side of display 202. As noted above, legs 108 are out of view of a user of laptop PC 201 and, advantageously, provide the additional compliant air volume required to obtain the desired quality of sound from loudspeakers 100 and 100-1. It should also be noted that clips 102 are under legs 108 and cannot be seen in this view. Additionally, it should be noted that clips 102 in some applications may actually be part of the PC display 202. For example they be mounted into the back side of display 202.

FIG. 4 is a top view of laptop PC 201 and display 202 showing the top view of the mounting of loudspeakers 100 and 100-1. Again, legs 108 of enclosure 101 are shown as being hidden from view to a user by being mounted on the back side of display 202. In FIG. 4, it is clearly seen that enclosure 101 are each in an "L-shape", being formed by leg 108 and leg 104.

Although this embodiment is shown and described as being mounted on the back of display 202 of laptop PC 201, loudspeakers 100 and 100-1 could also be detached from the display unit and used as desktop loudspeakers. Additionally, although the mounting clip 102 is used to secure enclosures 101 to the back of display 202, it will be apparent to those skilled in the art that an arrangement can be readily devised for mounting enclosures 101, for example, to the sides of display 202. Moreover, it will be apparent to those skilled in the art how to supply audio and power to loud speakers 100 and 100-1, which is not part of this invention.

## Claims

1. A loudspeaker enclosure having a predetermined amount of compliant air volume comprising:
a first enclosure leg having predetermined dimensions to provide a predetermined portion of the predetermined amount of compliant air volume; and
a second enclosure leg having predetermined dimensions to provide a second predetermined portion of the predetermined amount of compliant air volume, the combination said first and second portions equaling the predetermined amount of compliant air volume, said first enclosure leg and said second enclosure leg being physically arranged in an L-shape.

2. A loudspeaker enclosure as defined in claim 1 wherein said loudspeaker enclosure is a sealed enclosure.

3. A loudspeaker enclosure as defined in claim 1 or claim 2 wherein said second enclosure leg is arranged to be placed behind the back side of a personal computer (PC) display to which the enclosure is mountable, thereby being out of view of a user of the PC.

4. A loudspeaker enclosure as defined in claim 3 wherein said first enclosure leg has an upper outer surface which is arranged to face the front of the PC display to which the loudspeaker enclosure is mountable.

5. A loudspeaker enclosure as defined in claim 4 further including a loudspeaker transducer mounted on said upper outer surface of said first enclosure leg.

6. A loudspeaker enclosure as defined in any of the preceding claims further including a tuned port in an outer surface of said loudspeaker enclosure which is open to the atmosphere.

7. A loudspeaker enclosure as defined in claim 4 or claim 5 further including a tuned port in said upper outer surface of said first enclosure leg, said port being open to the atmosphere.

8. A loudspeaker enclosure as defined in any of claims 3,4,5 or 7 further including a mounting arrangement for mounting the loudspeaker enclosure to said PC display.

9. A loudspeaker enclosure as defined in claim 8 wherein said mounting arrangement includes a clip member arranged to be connected to said PC display.

10. A loudspeaker enclosure as defined in claim 9 wherein said clip member is removably connectable on said back side of said PC display.

11. A loudspeaker enclosure as defined in claim 9 wherein said clip member is included as a physical part on the back of said PC display.

12. A loudspeaker enclosure as defined in any of claims 9 to 11 wherein said second enclosure leg includes a mating section arranged to mate with said clip member for securely mounting the loudspeaker enclosure on said PC display.

13. A loudspeaker enclosure as defined in any of claims 3 to 5 or 7 to 12 wherein said PC is a laptop/notebook personal computer.

14. A loudspeaker enclosure as defined in any of the preceding claims wherein said second enclosure leg has an upper surface and said first enclosure leg has a rear surface and said L-shape is formed by said upper surface of said second enclosure leg being physically arranged at substantially a right angle to said rear surface of said first enclosure leg.
